Europäisches Patentamt

European Patent Office

Office européen des brevets

(11) Veröffentlichungsnummer : **0 154 776**
**B1**

# EUROPÄISCHE PATENTSCHRIFT

(45) Veröffentlichungstag der Patentschrift :
17.08.88

(51) Int. Cl.⁴ : **B 60 N   1/12**

(21) Anmeldenummer : **85100599.1**

(22) Anmeldetag : **22.01.85**

(54) Kindersicherungseinrichtung in Fahrzeugen.

(30) Priorität : **13.03.84 DE 3409074**

(43) Veröffentlichungstag der Anmeldung :
**18.09.85 Patentblatt 85/38**

(45) Bekanntmachung des Hinweises auf die Patenterteilung : **17.08.88 Patentblatt 88/33**

(84) Benannte Vertragsstaaten :
**DE FR GB IT SE**

(56) Entgegenhaltungen :
**EP-A- 0 066 372**
**DE-A- 2 803 574**
**DE-A- 2 806 548**
**DE-A- 3 019 153**
**US-A- 3 899 042**

(73) Patentinhaber : **Römer-Britax Autogurte GmbH**
**Blaubeurer Strasse 35-37 Postfach 35-37**
**D-7900 Ulm/Donau (DE)**

**ADAC e.V.**
**Am Westpark 8**
**D-8000 München (DE)**

(72) Erfinder : **Czernakowski, Waldemar**
**Ferdinand-Sauerbruch-Strasse 3**
**D-7906 Blaustein 1 (DE)**
Erfinder : **Wetter, Hermann**
**Alpenstrasse 60**
**D-7900 Ulm/Donau (DE)**
Erfinder : **Felsch, Bernhard, Dipl.-Ing.**
**Weipertshäusener Strasse 39**
**D-8193 Münsing (DE)**

(74) Vertreter : **Fay, Hermann, Dipl.-Phys. Dr.**
**Ensingerstrasse 21 Postfach 1767**
**D-7900 Ulm (Donau) (DE)**

EP 0 154 776 B1

## Beschreibung

Die Erfindung betrifft eine Kindersicherungseinrichtung in Fahrzeugen, bestehend aus einem auf einen Fahrzeugsitz aufsetzbaren Sitzteil und einem durch die Sicherheitsgurte des Fahrzeugsitzes sicherbaren Fangkörper, der am Sitzteil gehalten und in seiner Lage relativ zum Sitzteil entsprechend der Größe des Kindes in der Höhe und vor und zurück in Sitzrichtung verstellbar ist.

Eine derartige Kindersicherungseinrichtung ist aus der DE-A-30 19 153 bekannt. Bei dieser bekannten Kindersicherungseinrichtung ist der Fangkörper im wesentlichen U-förmig gebogen und mit seinen abwärts gerichteten U-Schenkeln auf das Sitzteil abgesetzt. Der Fangkörper ist mit im wesentlichen vertikalen Befestigungsstangen versehen, die in Führungen des Sitzteiles eingeschoben sind. Um eine Anpassung an die unterschiedliche Größe der Kinder zu ermöglichen, sind mehrere in Sitzrichtung hintereinander liegende Führungen für die Befestigungsstangen vorgesehen. Außerdem sind die Befestigungsstangen mit Kerben ausgestattet, durch die eine Fixierung des Fangkörpers auch in verschiedenen Höhen durch entsprechende Rasteinrichtungen in den die Befestigungsstangen aufnehmenden Führungen des Sitzteiles erfolgen kann. Zwar ist es mit Hilfe dieser Befestigungsstangen und der sie aufnehmenden Führungen möglich, den Fangkörper relativ zum Sitzteil abgestuft entsprechend der Größe des Kindes in der Höhe und in Sitzrichtung vor und zurück passend einzustellen, jedoch geht diese Einstellung jeweils beim Abnehmen des Fangkörpers vom Sitzteil, um beispielsweise das Kind in die Kindersicherungseinrichtung hineinzusetzen oder aus der Kindersicherungseinrichtung herauszunehmen, verloren und muß jedes Mal aufs Neue eingestellt werden, wenn der Fangkörper bei sitzendem Kind neu auf das Sitzteil aufgesteckt wird. Das erfordert jedesmal Sorgfalt und Aufmerksamkeit.

Der Erfindung liegt die Aufgabe zugrunde, eine Kindersicherungseinrichtung der eingangs genannten Art so auszubilden, daß der Fangkörper auch nach wiederholtem Aus- und Einsteigen des Kindes seine einmal sicherungstechnisch für optimal erkannte und eingestellte Lage zwangszweise immer wieder einnimmt, so daß eine jedesmalige Neueinstellung und Überprüfung dieser Lage entfällt.

Diese Aufgabe wird nach der Erfindung dadurch gelöst, daß das Sitzteil und der Fangkörper durch ein Koppelgetriebe verbunden sind, das mindestens ein in sich und/oder relativ zum Sitzteil und/oder zum Fangkörper verstellbares und in der jeweiligen Einstellung feststellbares Getriebeglied aufweist, mit dessen Hilfe die relativ zum Sitzteil und zum Kind sicherungstechnisch optimale Grundposition des Fangkörpers ein- und feststellbar ist, und das den Fangkörper zwischen dieser Grundposition und einer das Sitzteil zum Hineinsetzen oder Herausnehmen des Kindes freigebenden Lage hin- und zurückbewegbar führt.

Der durch die Erfindung erreichte Vorteil besteht im wesentlichen darin, daß der Fangkörper mit seiner dem Sicherheitsgurt zugeordneten Krafteinleitungszone nach der einmaligen Grundeinstellung des Fangkörpers auf ein bestimmtes Kind beim täglichen Ein- und Aussteigen immer wieder durch das Koppelgetriebe zwangsweise geführt, gleichsam automatisch in die einmal eingestellte, sicherheitstechnisch optimale Position zum Sitzteil und zum zu sichernden Kind zurückkehrt.

Eine bevorzugte Ausführungsform ist dadurch gekennzeichnet, daß das Koppelgetriebe von einem Verbindungsarm und einem Gelenk gebildet ist, wobei das Gelenk mit etwa horizontal und quer zur Fahrtrichtung des Fahrzeuges liegender Gelenkachse am Sitzteil höhenverstellbar und in der jeweiligen Einstellung feststellbar ist, und der um das Gelenk schwenkbare, den Fangkörper tragende Verbindungsarm eine begrenzte Eigensteifigkeit besitzt und jenseits der Grenze seiner Eigensteifigkeit flexibel ist. Bei dieser Ausführungsform ermöglicht das Gelenk die Grundeinstellung der Höhenlage, und die Flexibilität des Verbindungsarmes die laufende Feinanpassung der Höhenund Längsposition des Fangkörpers. Dabei genügt es, wenn der Verbindungsarm nur in einer zur Gelenkachse etwa senkrechten Ebene flexibel ist, um geringfügige Höhenverstellungen des Fangkörpers zu ermöglichen. Beispielsweise spielt dies eine Rolle im Sicherheitsfall, damit die Fangkräfte im wesentlichen nur von den Sicherheitsgurten, nicht vom Verbindungsarm aufgenommen werden, was eine gewisse Anpassungsfähigkeit des Verbindungsarms bezüglich der Höhe des Fangkörpers erfordert. Die Höhenverstellbarkeit des Gelenks kann zweckmäßig damit verbunden werden, daß das Gelenk verschiebbar in einer Gleitführung verstellbar und in seiner jeweiligen Einstellung feststellbar ist. Bei entsprechendem Verlauf der Gleitführung ermöglicht sie im Ergebnis nicht nur eine Höheneinstellbarkeit des Fangkörpers, sondern auch dessen Verstellbarkeit in Fahrtrichtung vor und zurück. Als besonders vorteilhaft hat es sich außerdem erwiesen, wenn der Verbindungsarm in sich, am Gelenk oder am Fangkörper um seine eigene Achse verdrehbar ist, so daß im Ergebnis der vom Kind weggeschwenkte Fangkörper noch um etwa 90° in die Fahrtrichtung gedreht werden kann, um den freien Zugang zum Sitzteil noch zu erleichtern.

Nach einem anderen Vorschlag der Erfindung kann das Koppelgetriebe aus einer kreisbogenförmigen Führung mit in oder gegen Fahrtrichtung angeordneter vertikaler oder horizontal unter dem Kind liegender Führungsebene bestehen, und daß eines von beiden Führungsgliedern am Sitzteil oder am Fangkörper höhenverstellbar und in der jeweiligen Höheneinstellung feststellbar angeschlossen sein. Auch hier kann es sich im übrigen empfehlen, daß der Fangkörper an dem ihn haltenden Führungsglied um eine etwa radial zum Führungszentrum gerichtete Achse schwenkbar gelagert ist, um wiederum die freie Zugänglichkeit zum Sitzteil zu verbessern.

In allen Fällen kann das Koppelgetriebe nur auf einer Seite oder nur in der Mitte des Sitzteils und des Fangkörpers vorgesehen sein. Das Koppelgetriebe kann sitzteilseitig unmittelbar am Sitzteil selbst oder an einem Basisteil angeordnet sein, das seinerseits kraft- und formschlüssig, aber lösbar an einem am Sitzteil vorgesehenen Führungsansatz für den Sicherheitsgurt angeordnet ist. Derartige Führungsansätze dienen bei den in Frage stehenden Sitzteilen üblicherweise dazu, mit dem zugleich den Fangkörper sichernden Beckengurt auch das Sitzteil selbst so zu sichern, daß es beim Unfall nicht auf dem Fahrzeugsitz in Fahrtrichtung nach vorn wegrutschen kann.

Eine weitere sehr vorteilhafte Ausführungsform des Koppelgetriebes besteht darin, daß es durch ein Vier-Gelenk mit jeweils zwei dem Fangkörper und dem Sitzteil zugeordneten Gelenken gebildet ist, wobei wenigstens die in Fahrtrichtung hintere Getriebestange zwischen dem Sitzteil und dem Fangkörper längenverstellbar ist, um die Grundposition des Fangkörpers einstellen zu können.

Im folgenden wird die Erfindung an in der Zeichnung dargestellten Ausführungsbeispielen näher erläutert ; es zeigen :

Fig. 1 eine erfindungsgemäße Kindersicherungseinrichtung in Vorderansicht,

Fig. 2 die Kindersicherungseinrichtung nach Fig. 1 in einer Seitenansicht,

Fig. 3 eine weitere Ausführungsform der erfindungsgemäßen Kindersicherungseinrichtung in Seitenansicht,

Fig. 4 eine andere Ausführungsform der erfindungsgemäßen Kindersicherungseinrichtung in einer Vorderansicht,

Fig. 5 die Kindersicherungseinrichtung nach Fig. 4 in Seitenansicht,

Fig. 6 eine andere Ausführungsform der erfindungsgemäßen Kindersicherungseinrichtung in Vorderansicht,

Fig. 7 die Kindersicherungseinrichtung nach Fig. 6 in Seitenansicht,

Fig. 8 eine wieder andere Ausführungsform der erfindungsgemäßen Kindersicherungseinrichtung in Vorderansicht,

Fig. 9 die Kindersicherungseinrichtung nach Fig. 8 in Seitenansicht. .

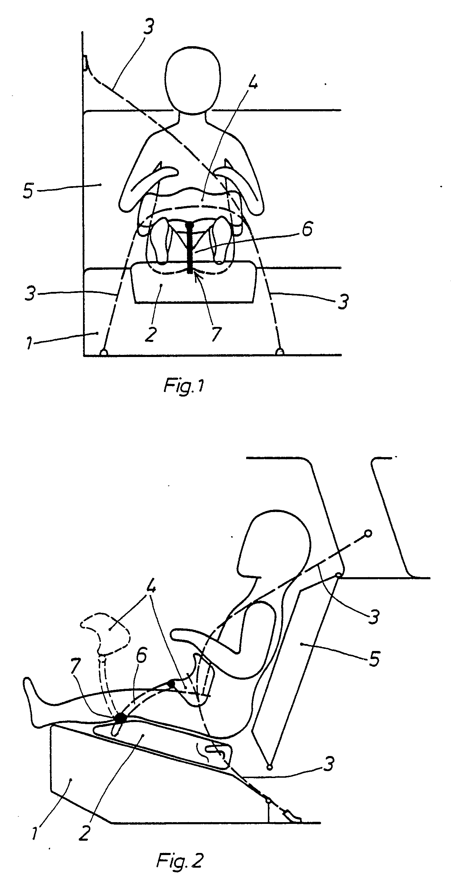

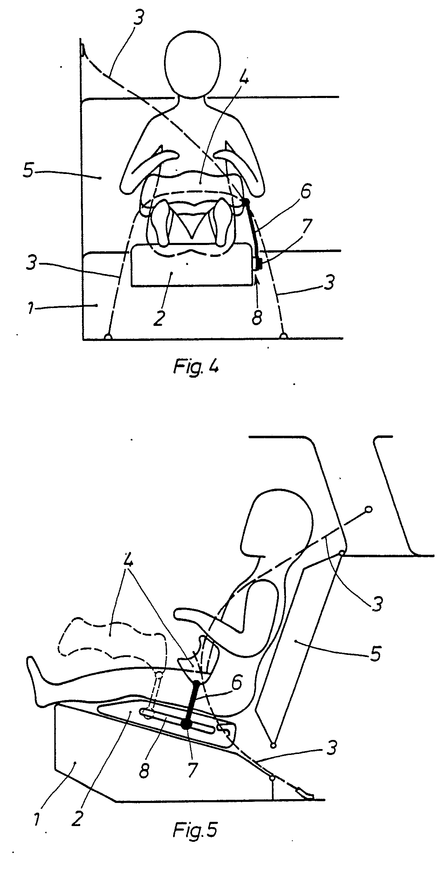

Die in der Zeichnung dargestellte Kindersicherungseinrichtung besteht aus einem auf einen Fahrzeugsitz 1 aufsetzbaren Sitzteil 2 und einem durch die Sicherheitsgurte 3 des Fahrzeugsitzes sicherbaren Fangkörper 4. Die Lehne des Fahrzeugsitzes ist mit 5 bezeichnet. Der Fangkörper 4 ist am Sitzteil 2 gehalten und in seiner Lage relativ zum Sitzteil 2 entsprechend der Größe des Kindes in der Höhe und vor und zurück in Sitzrichtung verstellbar. Dazu sind das Sitzteil 2 und der Fangkörper 4 durch ein Koppelgetriebe verbunden. Dieses Koppelgetriebe besitzt mindestens ein relativ zum Sitzteil 2 oder in sich selbst verstellbares und in der jeweiligen Einstellung feststellbares Getriebeglied, mit dessen Hilfe die relativ zum Sitzteil 2 und zum Kind sicherungstechnisch optimale Grundposition des Fangkörpers ein- und feststellbar ist, die in den Figuren jeweils ausgezogen dargestellt ist. Darüber hinaus bewirkt das Koppelgetriebe eine Zwangsführung des Fangkörpers 4 zwischen dieser Grundposition und einer das Sitzteil 2 zum Hineinsetzen oder Herausnehmen des Kindes freigebenden Lage, die in den Figuren jeweils gestrichelt dargestellt ist. Dabei kann der Fangkörper 4 zwischen der Grundposition und der das Sitzteil 2 freigebenden Lage hin- und zurückbewegt werden und nimmt in der das Kind sichernden, in den Figuren also ausgezogen dargestellten Lage die sicherungstechnisch einmal für optimal erkannte und eingestellte Position dank des Koppelgetriebes immer wieder ein. In den Fig. 1, 2 und 4 bis 7 ist das Koppelgetriebe von einem Verbindungsarm 6 und einem Gelenk 7 gebildet. Dabei ist das Gelenk 7 mit etwa horizontal und quer zur Fahrtrichtung des Fahrzeuges liegender Gelenkachse am Sitzteil 2 höhenverstellbar und in der jeweiligen Einstellung feststellbar, beispielsweise festklemmbar, angeordnet. Der um das Gelenk 7 schwenkbare, den Fangkörper 4 tragende Verbindungsarm 6 besitzt eine begrenzte Eigensteifigkeit und ist jenseits der Grenze seiner Eigensteifigkeit flexibel, so daß er zwar den Fangkörper 4 in die jeweils sicherungstechnisch günstigste Stellung am Kind zurückführt, jedoch geringfügigen Lageveränderungen des Fangkörpers 4 nachgeben kann, beispielsweise beim Unfall, wenn der Fangkörper 4 den Rückhaltekräften durch die Sicherheitsgurte 3 ausgesetzt ist. Auch im Unfall nimmt daher der Verbindungsarm 6 praktisch keine nennenswerten Kräfte auf. Im Prinzip genügt es, wenn der Verbindungsarm 6 im wesentlichen nur in einer zur Gelenkachse etwa senkrechten Ebene flexibel ist. Die Höhenverstellbarkeit des Gelenkes 7 kann entsprechend dem Ausführungsbeispiel nach den Fig. 4 und 5 mit einer Verschiebbarkeit des Gelenkes 7 in einer Gleitführung 8 verbunden sein. In der jeweiligen Einstellung längs der Gleitführung 8 ist das Gelenk 7 feststellbar. Durch entsprechende Neigung der Gleitführung 8 gegenüber der Horizontalen kann die Einstellung des Fangkörpers 4 sowohl in der Höhe wie in Fahrtrichtung vor und zurück vorgenommen werden. Im übrigen besteht die in Fig. 5 gestrichelt angedeutete Möglichkeit, die Anordnung so zu treffen, daß der Verbindungsarm 6 in sich, am Gelenk 7 oder am Fangkörper 4 um eine weitere, insbesondere seine eigene Achse verdrehbar ist, so daß er in der vom Kind zurückgenommenen Stellung zusätzlich in Fahrtrichtung oder nach oben, bzw. seitlich verschwenkbar ist und dadurch die freie Zugänglichkeit des Sitzteils 2 noch verbessert.

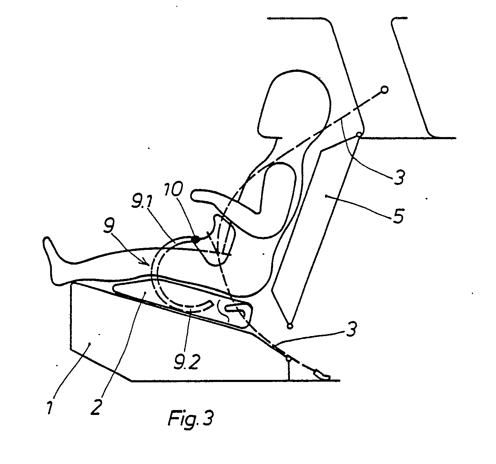

Die Fig. 3 zeigt eine Ausführungsform, bei der das Koppelgetriebe aus einer kreisbogenförmigen Führung 9 mit in Fahrtrichtung liegender vertikaler Führungsebene besteht. Eines von beiden Führungsgliedern 9.1, 9.2 ist am Sitzteil 2 oder am Fangkörper 4 verstellbar und in der jeweiligen Einstellung feststellbar angeschlossen. Im Ausführungsbeispiel ist dies das Führungsglied 9.1 am Fangkörper 4. Im übrigen besteht auch hier die Möglichkeit, den Fangkörper 4 an dem ihn haltenden Führungsglied 9.1 in einem Gelenk 10 um eine etwa radial zum Führungszentrum gerichtete Achse schwenkbar zu lagern, um ihn vergleichbar wie im Ausführungsbeispiel nach Fig. 5 in der von Kind zurückgenommenen Lage in Fahrtrichtung oder nach oben verschwenken zu können.

In allen Fällen besteht weiter die Möglichkeit, das Koppelgetriebe nur auf einer Seite, wie im Fall der Fig. 4 bis 7, oder in der Mitte des Sitzteiles 2 und des Fangkörpers 4, wie im Fall der Fig. 1 bis 3 vorzusehen.

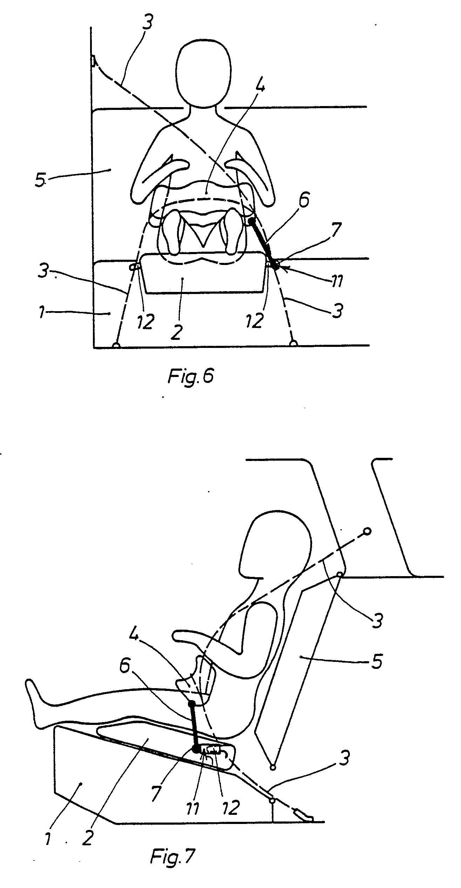

Statt das Koppelgetriebe sitzteilseitig unmittelbar am Sitzteil 2 selbst anzuschließen, besteht auch die in den Fig. 6 und 7 dargestellte Möglichkeit, das Koppelgetriebe sitzteilseitig an einem Basisteil 11 anzuordnen, das seinerseits kraft- und formschlüssig, aber lösbar an einem am Sitzteil 2 vorgesehenen Führungsansatz 12 für den Sicherheitsgurt 3 angeordnet ist, wobei diese Führungsansätze 12 verhindern, daß das Sitzteil 2 beim Unfall nach vorn vom Fahrzeugsitz 1 abrutschen kann. Aus letzterem Grund ist im übrigen die Anordnung immer so getroffen, daß zumindest das Beckengurtteil des Sicherheitsgurtes sowohl im Fangkörper 4 als auch gleichzeitig an Führungsansätzen 12 des Sitzteils 2 bei Unfallbelastung formschlüssig geführt ist. Man erkennt dabei, daß die Kindersicherungseinrichtung nicht, wie in den Ausführungsbeispielen dargestellt, immer unbedingt einen Dreipunktgurt erfordert, sondern auch in Verbindung mit einem Zweipunkt-Beckengurt verwendet werden kann.

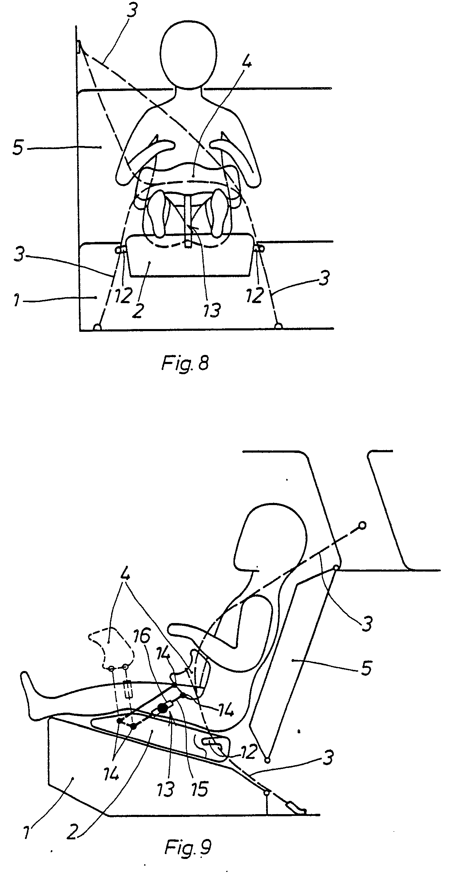

Schließlich zeigt das Ausführungsbeispiel nach den Fig. 8 und 9, daß das Koppelgetriebe auch durch ein Vier-Gelenk 13 mit jeweils zwei dem Fangkörper 4 und dem Sitzteil 2 zugeordneten Gelenken 14 gebildet sein kann. Wenigstens die in Fahrtrichtung hintere Getriebestange 15 ist zwischen dem Sitzteil 2 und dem Fangkörper 4 bis 16 längenverstellbar, um die Höhe des Fangkörpers 4 in der an das Kind herangeführten Position einstellen zu können.

**Patentansprüche**

1. Kindersicherungseinrichtung in Fahrzeugen, bestehend aus einem auf einen Fahrzeugsitz (1) aufsetzbaren Sitzteil (2) und einem durch die Sicherheitsgurte (3) des Fahrzeugsitzes sicherbaren Fangkörper (4), der am Sitzteil (2) gehalten und in seiner Lage relativ zum Sitzteil entsprechend der Größe des Kindes in der Höhe und in Sitzrichtung vor und zurück verstellbar ist, dadurch gekennzeichnet, daß das Sitzteil (2) und der Fangkörper (4) durch ein Koppelgetriebe (6, 7) verbunden sind, das mindestens ein in sich und/oder relativ zum Sitzteil und/oder zum Fangkörper verstellbares und in der jeweiligen Einstellung feststellbares Getriebeglied aufweist, mit dessen Hilfe die relativ zum Sitzteil (2) und zum Kind sicherungstechnisch optimale Grundposition des Fangkörpers (4) ein- und feststellbar ist, und das den Fangkörper (4) zwischen dieser Grundposition und einer das Sitzteil (2) zum Hineinsetzen oder Herausnehmen des Kindes freigebenden Lage hin- und zurückbewegbar führt.

2. Kindersicherungseinrichtung nach Anspruch 1, dadurch gekennzeichnet, daß das Koppelgetriebe von einem Verbindungsarm (6) und einem Gelenk (7) gebildet ist, wobei das Gelenk (7) mit etwa horizontal und quer zur Fahrtrichtung des Fahrzeugs liegender Gelenkachse am Sitzteil (2) höhenverstellbar ist, und der um das Gelenk (7) schwenkbare, den Fangkörper (4) tragende Verbindungsarm (6) eine begrenzte Eigensteifigkeit besitzt und jenseits der Grenze seiner Eigensteifigkeit flexibel ist.

3. Kindersicherungseinrichtung nach Anspruch 2, dadurch gekennzeichnet, daß der Verbindungsarm (6) nur in einer quer zur Gelenkachse etwa senkrechten Ebene flexibel ist.

4. Kindersicherungseinrichtung nach Anspruch 2 oder 3, dadurch gekennzeichnet, daß das Gelenk (7) verschiebbar in einer Gleitführung (8) verstellbar ist.

5. Kindersicherungseinrichtung nach einem der Ansprüche 2 bis 4, dadurch gekennzeichnet, daß der Verbindungsarm (6) in sich, am Gelenk (7) oder am Fangkörper (4) um seine eigene Achse verdrehbar ist.

6. Kindersicherungseinrichtung nach Anspruch 1, dadurch gekennzeichnet, daß das Koppelgetriebe aus einer kreisbogenförmigen Führung (9) mit in oder gegen Fahrtrichtung angeordneter vertikaler oder horizontal unter dem Kind liegender Führungsebene besteht, und daß eines von beiden Führungsgliedern (9.1, 9.2) am Sitzteil (2) oder am Fangkörper (4) höhenverstellbar und in der jeweiligen Höheneinstellung feststellbar angeschlossen ist.

7. Kindersicherungseinrichtung nach Anspruch 6, dadurch gekennzeichnet, daß der Fangkörper (4) an dem ihn haltenden Führungsglied (9.1) um eine etwa radial zum Führungszentrum gerichtete Achse schwenkbar gelagert ist.

8. Kindersicherungseinrichtung nach einem der Ansprüche 1 bis 7, dadurch gekennzeichnet, daß das Koppelgetriebe nur auf einer Seite oder in der Mitte des Sitzteils (2) und des Fangkörpers (4) vorgesehen ist.

9. Kindersicherungseinrichtung nach Anspruch 1, dadurch gekennzeichnet, daß das Koppelgetriebe durch ein Vier-Gelenk (13) mit jeweils zwei dem Fangkörper (4) und dem Sitzteil (2) zugeordneten Gelenken (14) gebildet ist, wobei wenigstens die in Fahrtrichtung hintere Getriebestange (15) zwischen dem Sitzteil (2) und dem Fangkörper (4) längenverstellbar ist.

10. Kindersicherungseinrichtung nach einem der Ansprüche 1 bis 9, dadurch gekennzeichnet, daß das Koppelgetriebe sitzteilseitig an einem Basisteil (11) angeordnet ist, das kraft- und formschlüssig, aber lösbar an einem am Sitzteil (2) vorgesehenen Führungsansatz (12) für den Sicherheitsgurt (3) angeordnet ist.

11. Kindersicherungseinrichtung nach einem der Ansprüche 1 bis 10, dadurch gekennzeichnet, daß das Beckengurtteil des Sicherheitsgurtes sowohl im Fangkörper (4) als auch gleichzeitig an Führungsansätzen (12) des Sitzteils (2) bei Unfallbelastung formschlüssig geführt ist.

## Claims

1. A device for securing children in vehicles, consisting of a seat component (2) which may be placed on a vehicle seat component (1) and a restraining body (4) which may be secured by the safety belt (3) of the vehicle seat and whose position may be adjusted up and down and forwards and backwards in the direction of the seat relative to the seat component according to the size of the child, characterised in that the seat component (2) and the restraining body (4) are connected by a coupler mechanism (6, 7), which has a mechanism member which is adjustable in itself and/or relative to the seat component and/or to the restraining body and is lockable in the respective setting, and by means of which the restraining body can be adjustable and lockable in its optimally securing basic position relative to the seat component (2) and to the child, and which guides the restraining body (4) movably forwards and backwards between this basic position and a position for releasing the seat component (2) in order to insert or remove a child.

2. A device for securing children according to Claim 1, characterised in that the coupler mechanism is formed of a connecting arm (6) and a hinge (7), the height of the hinge (7) being adjustable on the seat component (2) by a hinge axis lying approximately horizontal and transverse to the direction of travel of the vehicle, and the connecting arm (6) which carries the restraining body (4) and which is pivotable about the hinge (7) has a limited inherent rigidity and is flexible beyond the limit of its inherent rigidity.

3. A device for securing children according to Claim 2, characterised in that the connecting arm (6) is only flexible in an approximately vertical plane transverse to the hinge axis.

4. A device for securing children according to Claim 2 or 3, characterised in that the hinge (7) is slidably adjustable in a sliding guide (8).

5. A device for securing children according to one of Claims 2 to 4, characterised in that the connecting arm (6) is rotatable per se about its own axis on the hinge (7) or on the restraining body (4).

6. A device for securing children according to Claim 1, characterised in that the coupler mechanism consists of an arc-shaped guide (9) with a guide plane which is vertical or which lies horizontally below the child and which is disposed in or contrary to the direction of travel, and in that one of the two guide components (9.1, 9.2) adjoins the seat component (2) or the restraining body (4) in such a manner that its height is adjustable and it is lockable in the respective height position.

7. A device for securing children according to Claim 6, characterised in that the restraining body (4) is mounted on the guide member (9.1) supporting it in such a manner as to pivot about an axis approximately radially oriented with respect to the guide centre.

8. A device for securing children according to one of Claims 1 to 7, characterised in that the coupler mechanism is only provided on one side or in the middle of the seat component (2) and the restraining body (4).

9. A device for securing children according to Claim 1, characterised in that the coupler mechanism is formed by a four-bar mechanism (13) with two hinges (14) associated with the restraining body (4) and the seat component (2) in each case, in which case at least the mechanism bar (15) to the rear in the direction of travel is longitudinally adjustable between the seat component (2) and the restraining body (4).

10. A device for securing children according to one of Claims 1 to 9, characterised in that the coupler mechanism on the seat component side is mounted on a base member (11), which is mounted with power and positive locking, but detachably, on a guide projection (12) for the safety belt (3) provided on the seat component (2).

11. A device for securing children according to one of Claims 1 to 10, characterised in that, in the case of impact load caused by an accident, the pelvic portion of the safety belt is guided with positive locking both in the restraining body (4) and simultaneously on guide projections (12) of the seat portion (2).

## Revendications

1. Dispositif de sécurité d'enfant à l'intérieur de véhicules, avec un élément de siège (2) pouvant être posé sur un siège (1) du véhicule et un élément de retenue (4) pouvant être bloqué par les ceintures de sécurité (3) du siège du véhicule qui est maintenu sur l'élément de siège (2) et dont la position par rapport à l'élément de siège est réglable, conformément à la taille de l'enfant, en hauteur, ainsi qu'en avant et en arrière dans la direction du siège, caractérisé par le fait que l'élément de siège (2) et l'élément de retenue (4) sont reliés par un mécanisme de couplage (6, 7) qui comprend au moins un organe de transmission pouvant être réglé en soi et/ou par rapport à l'élément de siège et/ou par rapport à l'élément de retenue et bloqué dans la position respectivement choisie, à l'aide duquel la position de base de l'élément de retenue (4), optimale sur le plan de la technique de sécurité, peut être réglée et arrêtée par rapport à l'élément de siège (2) et à l'enfant, et qui guide l'élément de retenue (4) de façon mobile vers l'avant et vers l'arrière entre cette position de base et une position dégageant l'élément de siège (2) pour installer ou pour sortir l'enfant.

2. Dispositif de sécurité d'enfant selon la revendication 1, caractérisé par le fait que le mécanisme de couplage est constitué par un bras de jonction (6) et une articulation (7), l'articulation (7) dont l'axe est disposé à peu près horizontalement et transversalement par rapport à la direction de la marche du véhicule, pouvant être réglée en hauteur sur l'élément de siège (2) et le bras de jonction (6) pivotant autour de l'articulation (7) et portant l'élément de retenue (4) ayant une rigidité propre limitée et présentant une flexibilité au-delà de la limite de sa rigidité propre.

3. Dispositif de sécurité d'enfant selon la revendication 2, caractérisé par le fait que le bras de jonction (6) n'est flexible que dans un seul plan à peu près vertical et perpendiculaire à l'axe d'articulation.

4. Dispositif de sécurité d'enfant selon l'une des revendications 2 ou 3, caractérisé par le fait que l'articulation (7) peut être déplacée dans une coulisse (8).

5. Dispositif de sécurité d'enfant selon l'une quelconque des revendications 2 à 4, caractérisé par le fait que le bras de jonction (6) peut tourner, sur l'articulation (7) ou sur l'élément de retenue (4), autour de son propre axe.

6. Dispositif de sécurité d'enfant selon la revendication 1, caractérisé par le fait que le mécanisme de couplage est constitué par un guidage (9) en arc de cercle dont le plan de guidage est situé verticalement dans ou en sens contraire de la direction de la marche ou disposé horizontalement sous l'enfant, et que l'un des deux éléments de guidage (9.1, 9.2) est rattaché sur l'élément de siège (2) ou sur l'élément de retenue (4) de façon à pouvoir être réglé en hauteur et bloqué dans la position verticale respectivement réglée.

7. Dispositif de sécurité d'enfant selon la revendication 6, caractérisé par le fait que l'élément de retenue (4) est monté sur l'élément de guidage (9.1) qui le porte de telle façon qu'il peut pivoter autour d'un axe orienté à peu près radialement vers le centre de guidage.

8. Dispositif de sécurité d'enfant selon l'une quelconque des revendications 1 à 7, caractérisé par le fait que le mécanisme de couplage n'est prévu que d'un seul côté ou seulement au milieu de l'élément de siège (2) et de l'élément de retenue (4).

9. Dispositif de sécurité d'enfant selon la revendication 1, caractérisé par le fait que le mécanisme de couplage est constitué par une articulation quadruple (13) avec respectivement deux articulations (14) associées à l'élément de retenue (4) et à l'élément de siège (2), au moins la tringle (15) postérieure dans le sens de la marche pouvant être déplacée, dans le sens de la longueur, entre l'élément de siège (2) et l'élément de retenue (4).

10. Dispositif de sécurité d'enfant selon l'une quelconque des revendications 1 à 9, caractérisé par le fait que, du côté de l'élément de siège, le mécanisme de couplage est disposé sur un élément de base (11) qui est monté par adhérence et à engagement positif, mais de manière amovible, sur une embase de guidage (12) pour la ceinture de sécurité (3) prévue sur l'élément de siège (2).

11. Dispositif de sécurité d'enfant selon l'une quelconque des revendications 1 à 10, caractérisé par le fait que, sous l'effet de la charge appliquée en cas d'accident, l'élément de ceinture de bassin de la ceinture de sécurité est guidé à engagement positif à la fois dans l'élément de retenue (4) et sur les embases de guidage (12) de l'élément de siège (2).

Fig.1

Fig.2

Fig. 3

0 154 776

Fig. 4

Fig. 5

Fig.6

Fig.7

**0 154 776**

Fig. 8

Fig. 9